(19) Europäisches Patentamt / European Patent Office / Office européen des brevets

(11) **EP 1 644 208 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **04728117.5**

(22) Anmeldetag: **17.04.2004**

(51) Int Cl.:
***B60G 17/052*** (2006.01)

(86) Internationale Anmeldenummer:
**PCT/EP2004/004111**

(87) Internationale Veröffentlichungsnummer:
**WO 2005/002891 (13.01.2005 Gazette 2005/02)**

(54) **VERFAHREN ZUR MESSUNG EINES DRUCKS**

METHOD FOR MEASURING PRESSURE

PROCEDE POUR MESURER UNE PRESSION

(84) Benannte Vertragsstaaten:
**AT BE BG CH CY CZ DE DK EE ES FI FR GB GR HU IE IT LI LU MC NL PL PT RO SE SI SK TR**

(30) Priorität: **04.07.2003 DE 10330414**

(43) Veröffentlichungstag der Anmeldung:
**12.04.2006 Patentblatt 2006/15**

(73) Patentinhaber: **Continental Aktiengesellschaft 30165 Hannover (DE)**

(72) Erfinder: **HEIN, Dierk 30900 Wedemark (DE)**

(74) Vertreter: **Finger, Karsten Continental Aktiengesellschaft Patentabteilung Postfach 169 30001 Hannover (DE)**

(56) Entgegenhaltungen:
**EP-A- 1 243 447     EP-A- 1 321 320
DE-C- 10 052 663     DE-C- 19 959 556
GB-A- 2 373 223**

**Beschreibung**

Die vorliegende Erfindung betrifft ein Verfahren zur Messung eines Drucks, ein digitales Speichermedium zur Berechnung eines Drucks sowie eine Vorrichtung zur Messung eines Drucks, insbesondere zur Anwendung für Kraftfahrzeuge.

Üblicherweise erfolgt die Druckmessung mittels Drucksensoren. Für Drucksensoren sind verschiedene Sensorprinzipien bekannt, beispielsweise kapazitive oder piezoelektrische Sensoriken. Solche Drucksensoren werden auch für die Druckmessung bei Fahrzeugen mit Luftfedern und Niveauregelanlage eingesetzt. Die Befüllung der Luftfedern mit Druckmittel erfolgt dabei entweder in einem offenen oder in einem geschlossenen System.

In einem offenen System wird Umgebungsluft angesaugt, von einem Kompressor verdichtet und in die Luftfedern des Fahrzeugs gepumpt, bis ein gewünschtes Höhenniveau erreicht ist. Zur Verringerung des Niveaus wird Luft aus den Federn in die Umgebung abgelassen. Zur wiederholten Belüftung der Luftfedern wird wiederum Luft von außen angesaugt.

Bei einer geschlossenen Niveauregelanlage erfolgt dagegen kein Austausch von Druckmittel mit der Umgebung. Solche geschlossenen Niveauregelanlagen sind beispielsweise aus der gattungsgemäßen DE 199 59 556 C1 und EP 1 243 447 A2 bekannt geworden.

Ein gemeinsamer Nachteil von für solche Niveauregelanlagen verwendeten Drucksensoren ist, dass diese relativ unzuverlässig und teuer sind.

Der Erfindung liegt demgegenüber die Aufgabe zugrunde, ein verbessertes Verfahren zur Messung eines Drucks, insbesondere zur Messung eines Differenzdrucks zwischen einer Gasfeder und deren Zuleitung, zu schaffen. Der Erfindung liegt ferner die Aufgabe zugrunde, ein entsprechendes Computerprogrammprodukt und eine Vorrichtung zur Druckmessung zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die Erfindung ermöglicht die Messung eines Drucks ohne einen gesonderte Drucksensor. Die Druckmessung erfolgt basierend auf dem bei Öffnung eines Magnetventils fließenden Stroms. Ausgangspunkt der Erfindung ist dabei die Erkenntnis, dass der am Scheitelpunkt des Stromanstiegs fließende Strom charakteristisch für den Differenzdruck zwischen den durch das Magnetventil voneinander getrennten Bereichen ist. Erfindungsgemäß erfolgt daher die Differenzdruckbestimmung basierend auf der Ermittlung dieses Scheitelpunkts.

Nach einer bevorzugten Ausführungsform der Erfindung wird der durch die Spule des Magnetventils fließende Strom nach dem Anlegen der Spannung gemessen. Aus dieser Schaltstromcharakteristik wird der Scheitelwert bestimmt. Aus dem Scheitelwert des Stroms wird dann beispielsweise über ein Kennlinienfeld oder durch Berechnung der Differenzdruck ermittelt.

Nach einer weiteren bevorzugten Ausführungsform der Erfindung wird die an das Magnetventil angelegte Spulenspannung schrittweise erhöht, indem ein Pulsweitenmodulationsverhältnis schrittweise erhöht wird. Auch bei dieser Ausführungsform wird wiederum der Scheitelpunkt ermittelt. Das Pulsweitenmodulationsverhältnis am Scheitelpunkt bestimmt die an der Spule des Magnetventils anliegende mittlere Spannung und korreliert damit mit dem Strom und dem Differenzdruck. Bei dieser Ausführungsform erfolgt also die Ermittlung des Differenzdrucks basierend auf dem Pulsweitenmodulationsverhältnis am Scheitelpunkt des Stroms.

Nach einer weiteren bevorzugten Ausführungsform der Erfindung wird die Temperaturabhängigkeit des Spulenwiderstands bei der Berechnung des Spulenstroms aus dem Pulsweitenmodulationsverhältnis berücksichtigt.

Nach einer weiteren bevorzugten Ausführungsform der Erfindung wird das Pulsweitenmodulationsverhältnis am Scheitelpunkt auf eine Normspannung bezogen. Mittels dieser Normspannung wird das Magnetventil kalibriert.

Im Weiteren werden bevorzugte Ausführungsformen der Erfindung mit Bezugnahme auf die Zeichnungen näher erläutert. Es zeigen:

Figur 1     ein Blockdiagramm einer ersten Ausführungsform einer erfin- dungsgemäßen Vorrichtung zur Differenzdruckbestimmung,

Figur 2     eine Schaltstromcharakteristik des Spulenstroms in dem Mag- netventil der Vorrichtung gemäß Figur 1,

Figur 3     ein Flussdiagramm zur Bestimmung des Differenzdrucks mit Hilfe der Vorrichtung gemäß Figur 1,

Figur 4     ein Blockdiagramm einer weiteren bevorzugten Ausführungs- form einer Vorrichtung zur Differenzdruckbestimmung,

Figur 5     ein Flussdiagramm zur Ermittlung des Differenzdrucks mit Hilfe der Vorrichtung der Figur 4,

Figur 6     die Schaltstromcharakteristik des Spulenstroms in der Ausfüh- rungsform gemäß Figur 4 bei schrittweiser Erhöhung des Pulsweitenmodulationsverhältnisses,

Figur 7     ein Flussdiagramm einer weiteren bevorzugten Ausführungs- form mit einer Magnetventilkalibrierung und einer Berücksichti- gung der Spulentemperatur für die Differenzdruckbestimmung,

Figur 8     ein Flussdiagramm zur Magnetventilkalibrierung,

Figur 9     ein Flussdiagramm zur Ermittlung eines Spulentemperaturfak- tors,

Figur 10    ein Flussdiagramm zur Ermittlung eines auf eine Normspan- nung bezogenen Pulsweitenmodulationsverhältnisses,

Figur 11    ein Flussdiagramm zu Ermittlung des Differenzdrucks aus dem Spulentemperaturfaktor und dem auf die Normspannung bezogenen Pulsweitenmodulationsverhältnis.

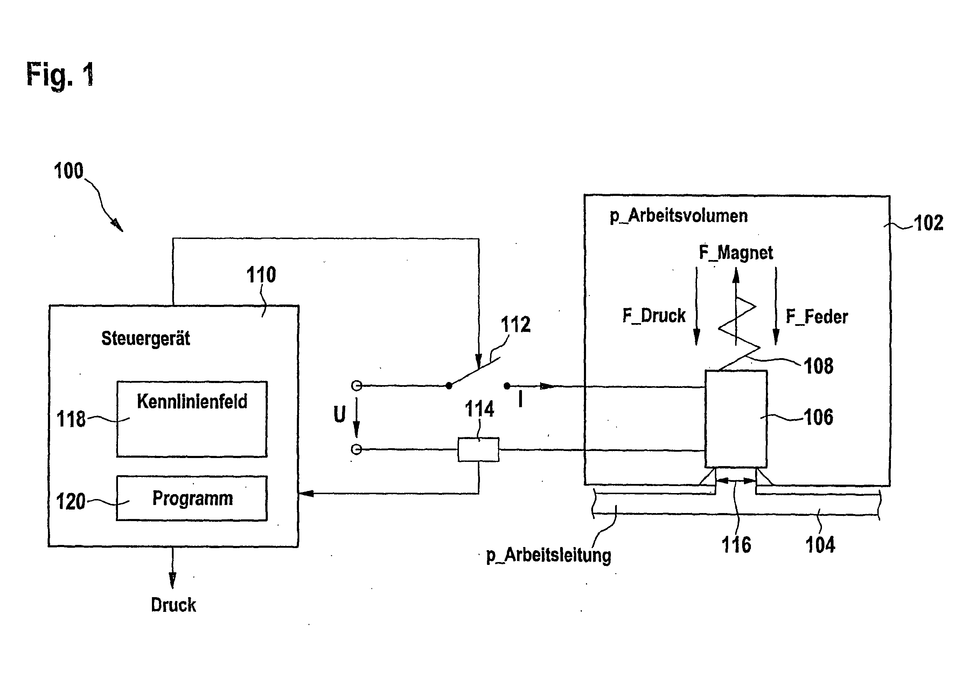

Die Figur 1 zeigt eine Vorrichtung 100 zur Druckbestimmung. Mittels der Vorrichtung 100 wird die Druckdifferenz zwischen dem in einem Arbeitsvolumen einer Gasfeder 102 herrschenden Druck p_Arbeitsvolumen und dem in einer an die Gasfeder 102 angeschlossenen Arbeitsleitung 104 herrschenden Druck p_Arbeitsleitung gemessen. Die Arbeitsleitung 104 ist mit der Gasfeder 102 über ein Magnetventil 106 verbindbar.

Wenn keine elektrische Spannung an das Magnetventil 106 angelegt wird, wird das Magnetventil 106 durch eine Feder 108, die eine Federkraft F_Feder auf das Magnetventil 106 in Schließrichtung ausübt, sowie durch den in dem Arbeitsvolumen der Gasfeder 102 herrschenden Druck p_Arbeitsvolumen mit der resultierenden Kraft F_Druck in der Schließposition gehalten.

Durch ein Steuergerät 110 kann ein Schalter 112 geschlossen werden, um eine Spannung U an die Spule des Magnetventils 106 anzulegen. Dadurch fließt ein Strom I durch die Spule. Dieser Strom I wird durch ein Strommessgerät 114 gemessen und in das Steuergerät 110 eingegeben.

Aufgrund des Stroms I ergibt sich eine Öffnungskraft F_Magnet des Magnetventils 106, die den Kräften F_Druck und F_Feder entgegengerichtet ist.

Kurz vor der Öffnung des Magnetventils 106, d. h. zum Zeitpunkt des Hubanfangs, herrscht das folgende Kräftegleichgewicht:

$$\text{F\_Magnet} \ = \ \text{F\_Druck} + \text{F\_Feder},$$

wobei F_Feder im Wesentlichen konstant ist und F_Druck eine Funktion des Drucks p_Arbeitsvolumen sowie der Ventilnennweite 116 des Magnetventils ist. Zum Zeitpunkt des Hubanfangs hat der Strom I seinen Scheitelwert I_Schalt.

Das Steuergerät 110 hat einen Speicher 118, in dem ein Kennlinienfeld gespeichert ist. Je nach dem Druck p_Arbeitsvolumen gehört zu jedem Hubanfang des Magnetventils 106 und zu jeder Ventilnennweite 116 ein unterschiedlicher Schaltstrom I_Schalt. Das Kennlinienfeld in dem Speicher 118 korreliert also verschiedene Schaltströme I_Schalt mit dem entsprechenden Drücken, d. h. p_Arbeitsvolumen.

Das Steuergerät 110 hat ferner ein Programm 120, welches auf einem digitalen Speichermedium, beispielsweise im Arbeitsspeicher des Steuergerätes 110, gespeichert ist. Das Programm 120 ermittelt aus den von dem Strommessgerät 114 gelieferten Strommesswerten den Scheitelpunkt des Stromverlaufs. Der Scheitelwert des Stroms, d. h. I_Schalt dient dem Programm 120 dazu, um aus dem in dem Speicher 118 gespeicherten Kennlinienfeld den Druck zu ermitteln. Wenn es sich bei dem Druck in der Arbeitsleitung p_Arbeitsleitung um den Atmosphärendruck handelt, erhält man p_Arbeitsvolumen als relativen Druck zur Atmosphäre. Durch Umrechnung kann daraus der absolute Druck ermittelt werden. Wenn hingegen der Druck p_Arbeitsleitung oberhalb des Atmosphärendrucks liegt, erhält man den Differenzdruck zwischen p_Arbeitsvolumen und p_Arbeitsleitung.

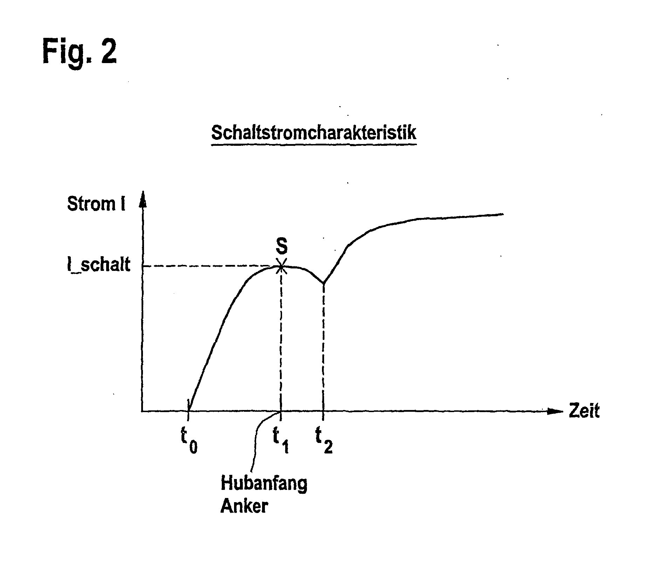

Die Figur 2 zeigt die entsprechende Schaltstromcharakteristik. Zum Zeitpunkt $t_0$ wird der Schalter 112 (vgl. Figur 1) geschlossen, so dass der Strom I durch die Spule des Magnetventils 106 zu fließen beginnt. Zum Zeitpunkt $t_1$ erreicht der Strom I ein lokales Maximum I_Schalt an seinem Scheitelpunkt S.

An dem Scheitelpunkt S herrscht kurz vor dem Hubanfang ein Gleichgewicht zwischen den auf den Magnetanker des Magnetventils 106 wirkenden Kräften. Nach dem Zeitpunkt $t_1$ setzt sich der Magnetanker des Magnetventils 106 aus der Schließposition heraus in Bewegung. Aufgrund der dadurch erzeugten Gegeninduktion sinkt der Strom I bis zum Zeitpunkt $t_2$ ab, zu dem das Magnetventil 106 vollständig geöffnet ist. Nach diesem Zeitpunkt fällt die Gegeninduktion weg und der Strom I steigt bis in die Sättigung.

Der in der Figur 2 gezeigte Verlauf des Stroms I wird von dem Strommessgerät 114 gemessen und in das Steuergerät 110 eingegeben (vgl. Figur 1). Dort wird mittels des Programms 120 der Scheitelpunkt S bestimmt. Aus dem Schaltstrom I_Schalt an dem Scheitelpunkt S wird über das in dem Speicher 118 gespeicherte Kennlinienfeld der Druck bestimmt.

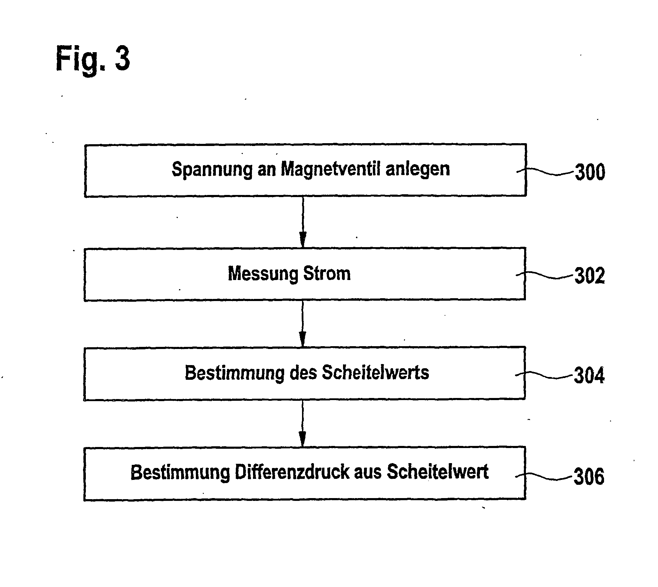

Die Figur 3 zeigt ein entsprechendes Flussdiagramm. In dem Schritt 300 wird eine Spannung an das Magnetventil angelegt. Der daraufhin durch die Spule des Magnetventils fließende Strom wird in dem Schritt 302 gemessen. In dem Schritt 304 wird der Scheitelwert des Stroms zum Zeitpunkt des Hubanfangs des Magnetankers bestimmt. Hierzu wird beispielsweise das erste lokale Maximum nach der Anlegung der Spannung an das Magnetventil in dem Schritt 300 bestimmt. Mit Hilfe des Scheitelwerts I_Schalt wird in dem Schritt 306 der Druck beispielsweise mit Hilfe eines Kennlinienfeldes bestimmt.

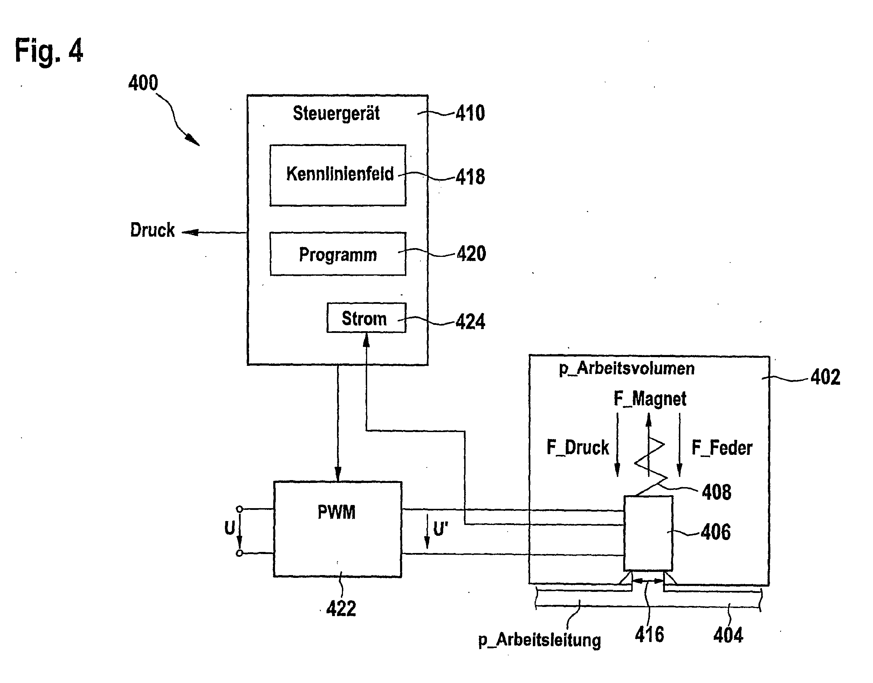

Die Figur 4 zeigt eine weitere bevorzugte Ausführungsform einer Vorrichtung zur Druckmessung. Elemente der Figur 4, die Elemente der Figur 1 entspre-

chen, sind mit um 300 erhöhten Bezugszeichen gekennzeichnet.

Im Unterschied zu der Ausführungsform der Figur 1 wird bei der Ausführungsform der Figur 4 die Spannung U nicht unmittelbar an die Spule des Magnetventils 406 angelegt, sondern über eine Pulsweitenmodulationsschaltung 422. Die Strommessung erfolgt bei der hier betrachteten Ausführungsform durch ein Modul 424 eines integrierten Schaltkreises des Steuergerätes 410.

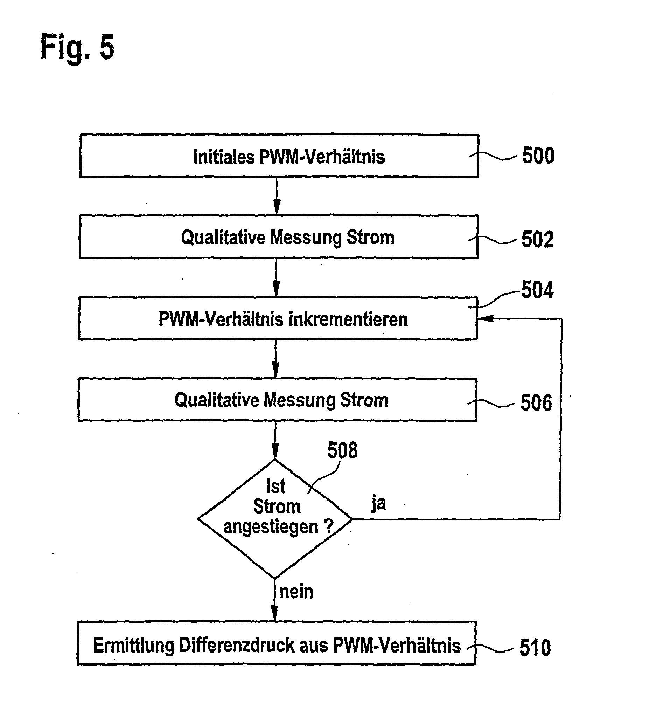

Die Strommessung kann dabei rein qualitativ sein, d. h. es kommt nicht auf die absolute Höhe des gemessenen Stromwerts an, sondern nur darauf, ob der Strom ansteigend oder abfallend ist. Für eine solche qualitative Messung ist die mit einem integrierten Schaltkreis erreichbare Messgenauigkeit ausreichend. Der Betrieb der Vorrichtung 400 wird anhand des Flussdiagramms der Figur 5 näher erläutert.

In dem Schritt 500 startet das Programm 420 des Steuergeräts 410 die Messsequenz indem ein initiales Pulsweitenmodulationsverhältnis nahe 0 als Steuersignal an die Pulsweitenmodulationsschaltung 422 ausgegeben wird. Am Ausgang der Pulsweitenmodulationsschaltung 422 wird daher die relativ geringe Spannung U', die sich aus der pulsweitenmodulierten Spannung U ergibt, an die Spule des Magnetventils 406 angelegt. Der sich daraus ergebende Spulenstrom wird durch das Modul 424 qualitativ gemessen und in das Programm 420 eingegeben. Dies erfolgt in dem Schritt 502.

In dem Schritt 504 erhöht das Programm 420 das Pulsweitenmodulationsverhältnis, indem es ein entsprechendes Steuersignal an die Pulsweitenmodulationsschaltung 422 ausgibt. Der aufgrund der Erhöhung des Pulsweitenmodulationsverhältnisses resultierende Strom wird wiederum durch das Modul 424 qualitativ in dem Schritt 506 gemessen.

In dem Schritt 508 wird durch das Programm 420 geprüft, ob der Strom im Vergleich zu der vorhergehenden Strommessung angestiegen ist. Wenn dies der Fall ist, geht der Programmablauf des Programms 420 zu dem Schritt 504 zurück, um das Pulsweitenmodulationsverhältnis erneut zu inkrementieren.

Ist das Gegenteil der Fall, bedeutet dies, dass der Scheitelpunkt des Stromverlaufs bei dem aktuellen Pulsweitenmodulationsverhältnis erreicht worden ist und in dem Schritt 510 wird auf dieser Basis aus dem Kennlinienfeld 418 oder durch Berechnung durch das Steuergerät 410 der Druck ermittelt.

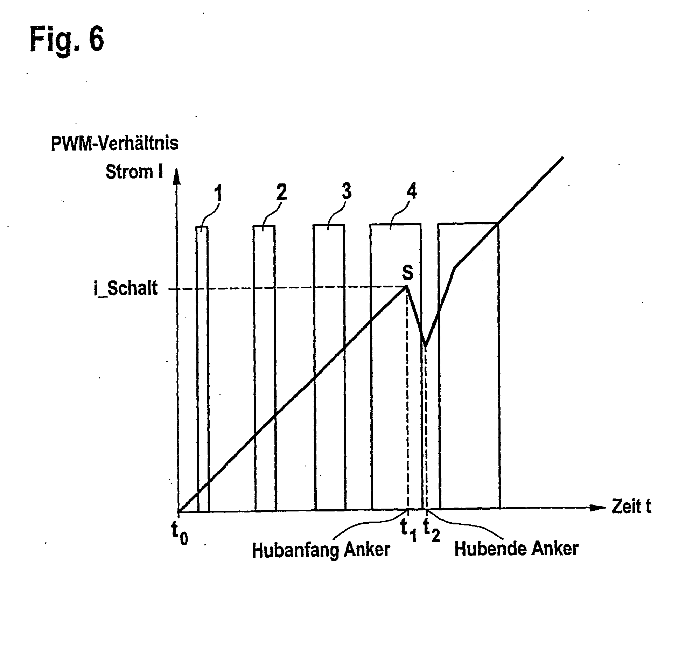

Das Diagramm der Figur 6 zeigt den entsprechenden Stromverlauf in Relation zu den Pulsweitenmodulations(PWM)-Verhältnissen. Beginnend vom Startzeitpunkt $t_0$ der Messsequenz wird dabei das PWM-Verhältnis in den Schritten 1, 2, 3 und 4 erhöht, wobei der Strom I qualitativ gemessen wird. Zu dem Zeitpunkt $t_1$ wird festgestellt, dass der Strom I seinen Scheitelwert I_Schalt erreicht hat. Das PWM-Verhältnis zu diesem Zeitpunkt $t_1$ ist dabei über die an der Spule des Magnetventils 406 anliegende Spannung U' und den aufgrund des Spulenwiderstands fließenden Strom I_Schalt mit dem Druck korreliert. Über ein entsprechendes Kennlinienfeld kann daher bei konstanter Spannung U allein aus dem PWM-Verhältnis der Druck ermittelt werden.

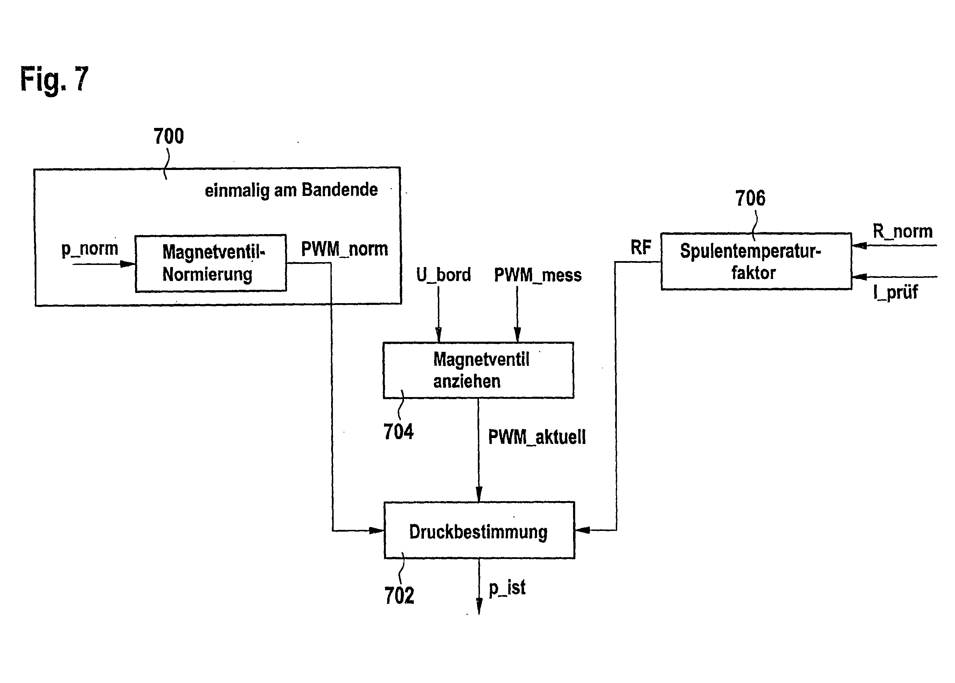

Wenn die Spannung U nicht konstant ist, wie das etwa bei der Bordspannung von Kraftfahrzeugen der Fall sein kann, ist eine Berechnung des Spulenstroms I_Schalt aus dem PWM-Verhältnis am Scheitelpunkt S erforderlich. Diese Berechnung erfolgt nach dem Ohmschen Gesetz aus dem Spulenwiderstand. Zur Erhöhung der Genauigkeit kann dabei die Temperaturabhängigkeit des Spulenwiderstands mit berücksichtigt werden. Ein Ausführungsbeispiel für eine entsprechende Vorgehensweise wird im Weiteren mit Bezugnahme auf die Figuren 7 bis 11 näher erläutert.

Die Figur 7 zeigt ein Flussdiagramm zur Druckbestimmung unter Berücksichtigung einer Kalibrierung des Magnetventils und der Spulentemperatur. In dem Schritt 700 erfolgt eine Kalibrierung des Magnetventils (vgl. Magnetventil 106 der Figur 1 und Magnetventil 406 der Figur 4). Bei der Kalibrierung herrscht ein Norddruck p_norm von z. B. 10 bar in der Gasfeder (vgl. Gasfeder 102 der Figur 1 und Gasfeder 402 der Figur 4), und zwar bei einer Normtemperatur von z. B. T=20° und einer Normspannung U_norm von z. B. 6 Volt.

Zur Kalibrierung des Magnetventils wird das PWM-Verhältnis PWM_norm ermittelt, bei welchem der Schaltstrom I_Schalt fließt. Dieser Wert PWM_norm geht in die Druckbestimmung in dem Schritt 702 ein. Der Wert PWM_norm wird beispielsweise nur einmal nach der Produktion des Kraftfahrzeugs am Bandende ermittelt und dann in dem Steuergerät gespeichert.

Zur Druckbestimmung in dem Schritt 702 ist es zunächst erforderlich, dass das PWM-Verhältnis PWM_mess an dem Scheitelpunkt S der Stromkurve ermittelt wird. Dieser Wert PWM_mess sowie die Bordspannung U_bord werden in dem Schritt 704 in den Wert PWM_aktuell umgerechnet, welcher für die Druckbestimmung in dem Schritt 702 verwendet wird.

In dem Schritt 706 wird ein Spulentemperaturfaktor RF aus einem Normwiderstand R_norm und einem Prüfstrom I_prüf ermittelt. Der Spulentemperaturfaktor RF wird ebenfalls bei der Druckbestimmung in dem Schritt 702 zur Ermittlung des Drucks p_aktuell berücksichtigt.

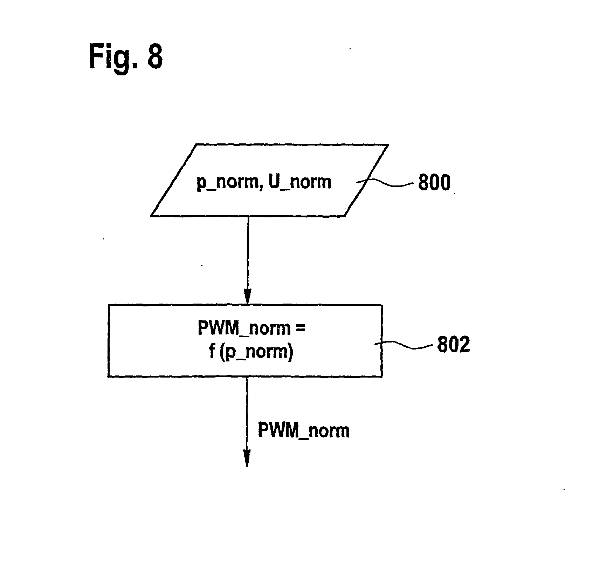

Die Figur 8 zeigt die Vorgehensweise zur Bestimmung von PWM_norm in dem Schritt 700. In dem Schritt 800 wird der Normdruck p_norm am Bandende extern eingestellt. Ferner wird die Normspannung U_norm angelegt. In dem Schritt 802 wird das PWM-Verhältnis PWM_norm am Scheitelpunkt S des Stromverlaufs bei diesen Normbedingungen ermittelt, wobei der Wert PWM_norm eine Funktion von p_norm sowie der geometrischen und Materialtoleranzen ist.

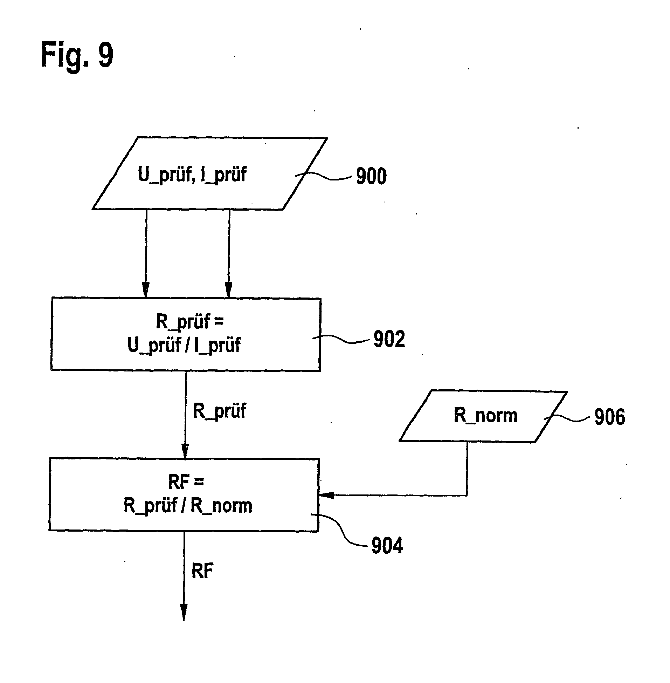

Die Figur 9 verdeutlicht die Vorgehensweise in dem Schritt 706 zur Ermittlung des Spulentemperaturfaktors RF. In dem Schritt 900 wird durch entsprechende Einstellung des Pulsweitenmodulationsverhältnisses ein bestimmter Strom I_prüf in der Spule des Magnetventils erzeugt. Aus der Bordspannung U_bord ergibt sich aus diesem PWM-Verhältnis die Spannung U_prüf, die an der Spule anliegt. In dem Schritt 902 wird hieraus nach dem Ohmschen Gesetz der Spulenwiderstand R_prüf. berechnet.

In dem Schritt 904 wird der Widerstand R_prüf auf einen Normwiderstand R_norm bezogen, woraus sich der Spulentemperaturfaktor RF ergibt. Der Normwiderstand R_norm wird in dem Schritt 906 vorzugsweise bei der Kalibrierung in dem Schritt 700 ermittelt und in dem Steuergerät gespeichert.

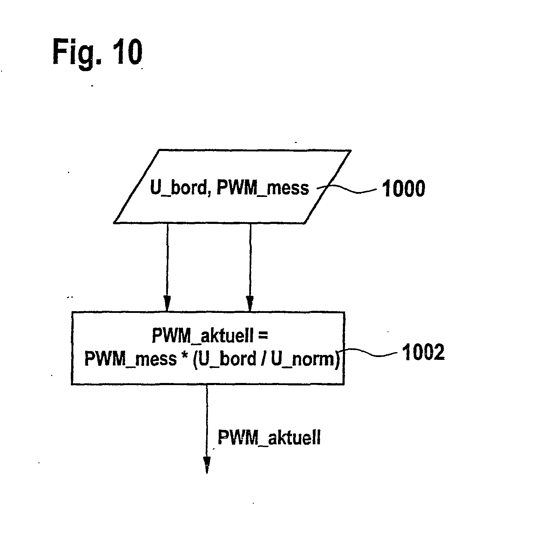

Die Figur 10 zeigt die Vorgehensweise zur Ermittlung von PWM_aktuell in dem Schritt 704. In dem Schritt 1000 werden hierzu die Bordspannung U_bord sowie das PWM-Verhältnis PWM_mess am Scheitelpunkt S eingegeben. Hieraus wird in dem Schritt 1002 der Wert PWM_aktuell berechnet, indem PWM_mess mit dem Verhältnis aus U_bord und U_norm multipliziert wird.

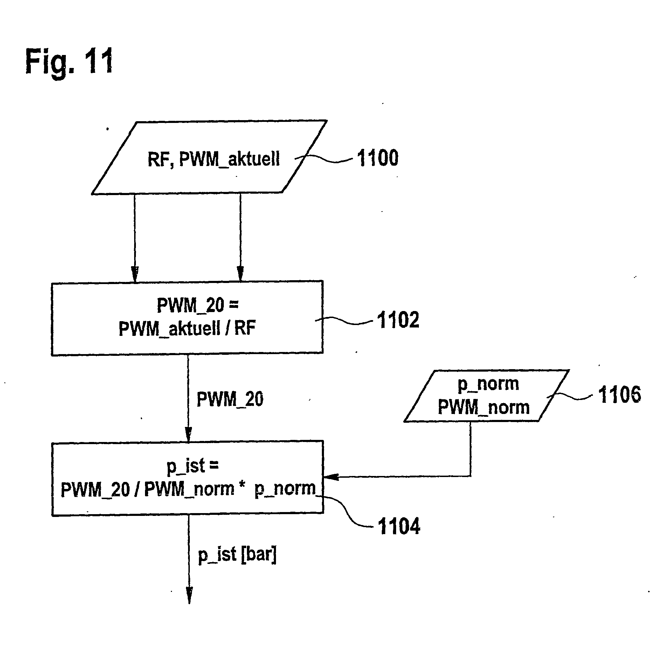

Figur 11 zeigt die Vorgehensweise zur Druckbestimmung in dem Schritt 702. Hierzu werden in dem Schritt 1100 der Spulentemperaturfaktor RF und der Wert PWM_aktuell eingegeben. In dem Schritt 1102 wird hieraus das PWM-Verhältnis bei Normtemperatur, d. h. in diesem Beispiel T = 20°, PWM_20 durch Division von PWM_aktuell durch RF berechnet.

In dem Schritt 1104 wird aus dem Wert PWM_20 der Druck p_ist berechnet. Hierzu werden in dem Schritt 1106 der Normdruck p_norm und der durch Kalibrierung ermittelte Wert PWM_norm eingegeben. Die Berechnung erfolgt durch Division von PWM_20 durch PWM_norm und Multiplikation mit P_norm.

**Bezugszeichenliste**

| | |
|---|---|
| 100 | Vorrichtung |
| 102 | Gasfeder |
| 104 | Arbeitsleitung |
| 106 | Magnetventil |
| 108 | Feder |
| 110 | Steuergerät |
| 112 | Schalter |
| 114 | Strommessgerät |
| 116 | Ventilnennweite |
| 118 | Speicher |
| 120 | Programm |
| 400 | Vorrichtung |
| 402 | Gasfeder |
| 404 | Arbeitsleitung |
| 406 | Magnetventil |
| 408 | Feder |
| 410 | Steuergerät |
| 416 | Ventilnennweite |
| 418 | Speicher |
| 420 | Programm |
| 422 | Pulsweitenmodulationsschaltung |

| | |
|---|---|
| 424 | Modul |

**Patentansprüche**

1.  Verfahren zur Messung eines Drucks in einem Bereich, der mit einem Magnetventil abgeschlossen ist, **gekennzeichnet durch** die folgenden Schritten:

    - Anlegen einer Spannung an das Magnetventil,
    - Ermittlung eines Scheitelpunkts des aufgrund der Spannung fließenden Stroms,
    - Ermittlung des Drucks basierend auf der Ermittlung des Scheitelpunkts.

2.  Verfahren nach Anspruch 1, wobei der Scheitelwert des Stroms an dem Scheitelpunkt gemessen wird, und der Druck basierend auf dem Scheitelwert ermittelt wird.

3.  Verfahren nach Anspruch 1 oder 2, wobei die Ermittlung des Drucks über ein Kennlinienfeld erfolgt.

4.  Verfahren nach Anspruch 1, 2 oder 3, wobei die Ermittlung des Drucks durch Berechnung erfolgt.

5.  Verfahren nach einem der vorhergehenden Ansprüche 1 bis 4, wobei die Spannung durch schrittweise Erhöhung eines Pulsweitenmodulationsverhältnisses schrittweise erhöht wird, und die Ermittlung des Drucks basierend auf dem Pulsweitenmodulationsverhältnis am Scheitelpunkt erfolgt.

6.  Verfahren nach Anspruch 5, wobei aus dem Pulsweitenmodulationsverhältnis am Scheitelpunkt und einem Spulenwiderstand des Magnetventils der Scheitelwert des Stroms ermittelt wird, und die Ermittlung des Drucks basierend auf dem Scheitelwert erfolgt.

7.  Verfahren nach einem der vorhergehenden Ansprüche 1 bis 6, wobei zur Ermittlung des Drucks basierend auf dem Scheitelwert des Stroms eine Temperaturabhängigkeit des Spulenwiderstands des Magnetventils berücksichtigt wird.

8.  Verfahren nach einem der vorhergehenden Ansprüche 5, 6 oder 7, wobei das Pulsweitenmodulationsverhältnis an dem Scheitelpunkt auf eine Normspannung bezogen wird.

9.  Verfahren nach Anspruch 8, wobei mittels der Normspannung eine Kalibrierung des Magnetventils erfolgt.

10. Verfahren nach einem der vorhergehenden Ansprüche 1 bis 9, wobei es sich bei dem Bereich um ein Arbeitsvolumen einer Gasfeder, insbesondere einer Luftfeder, handelt.

11. Computerprogramm zur Berechnung eines Drucks in einem Bereich, der mit einem Magnetventil abgeschlossen ist, **gekennzeichnet durch** Programmmittel zur Durchführung der folgenden Schritte:

    - Ermittlung eines Scheitelpunkts des aufgrund einer an das Magnetventil angelegten Spannung fließenden Stroms,
    - Ermittlung des Drucks basierend auf der Ermittlung des Scheitelpunkts.

12. Computerprogramm nach Anspruch 11, wobei die Ermittlung des Drucks basierend auf dem Scheitelwert des Stroms an dem Scheitelpunkt erfolgt.

13. Computerprogrammprodukt nach Anspruch 11 oder 12, mit einer Kennlinie zur Ermittlung des Drucks basierend auf dem Scheitelwert des Stroms an dem Scheitelpunkt.

14. Computerprogrammprodukt nach Anspruch 11, 12 oder 13, wobei die Programmmittel zur Berechnung des Drucks basierend auf den Scheitelpunkt ausgebildet sind.

15. Computerprogrammprodukt nach einem der vorhergehenden Ansprüche 11 bis 14, wobei die Programmmittel zur schrittweisen Erhöhung der Spannung durch schrittweise Erhöhung eines Pulsweitenmodulationsverhältnisses ausgebildet sind, und zur Ermittlung des Drucks basierend auf dem Pulsweitenmodulationsverhältnis am Scheitelpunkt.

16. Computerprogrammprodukt nach Anspruch 15, wobei die Programmmittel zur Berechnung des Scheitelwerts des Stroms aus dem Pulsweitenmodulationsverhältnis am Scheitelpunkt und aus dem Spulenwiderstand des Magnetventils ausgebildet sind.

17. Vorrichtung zur Bestimmung eines Drucks in einem Bereich, der mit einem Magnetventil (106; 406) abgeschlossen ist, mit einem Steuergerät (110; 410) zum Anlegen einer Spannung an das Magnetventil, **dadurch gekennzeichnet, daß** das Steuergerät zur Ermittlung eines Scheitelpunkts (S) des aufgrund der Spannung fließenden Stroms (I) und zur Ermittlung des Drucks basierend auf den Scheitelpunkt ausgebildet ist.

18. Vorrichtung nach Anspruch 17, mit Mitteln (114; 420, 424) zur Ermittlung des Scheitelwerts (I_Schalt) des Stroms an dem Scheitelpunkt (S), wobei das Steuergerät zur Ermittlung des Drucks basierend auf dem Scheitelwert ausgebildet ist.

19. Vorrichtung nach Anspruch 17 oder 18, wobei das Steuergerät zur schrittweisen Erhöhung eines Pulsweitenmodulationsverhältnisses der an das Magnetventil angelegten Spannung und zur Ermittlung des Drucks basierend auf dem Pulsweitenmodulationsverhältnis am Scheitelpunkt ausgebildet ist.

## Claims

1. Method for measuring a pressure in a region which is closed off by a solenoid valve, **characterized by** the following steps:

   - applying a voltage to the solenoid valve,
   - determining a peak point of the current flowing on account of the voltage,
   - determining the pressure based on the determination of the peak point.

2. Method according to Claim 1, the peak value of the current being measured at the peak point, and the pressure being determined on the basis of the peak value.

3. Method according to Claim 1 or 2, the pressure being determined by means of a family of characteristic curves.

4. Method according to Claim 1, 2 or 3, the pressure being determined by calculation.

5. Method according to one of the preceding Claims 1 to 4, the voltage being increased step by step by increasing a pulse width modulation ratio step by step, and the pressure being determined on the basis of the pulse width modulation ratio at the peak point.

6. Method according to Claim 5, the peak value of the current being determined from the pulse width modulation ratio at the peak point and a coil resistance of the solenoid valve, and the pressure being determined on the basis of the peak value.

7. Method according to one of the preceding Claims 1 to 6, a temperature dependence of the coil resistance of the solenoid valve being taken into account for determining the pressure on the basis of the peak value of the current.

8. Method according to one of the preceding Claims 5, 6 or 7, the pulse width modulation ratio at the peak point being referred to a standard voltage.

9. Method according to Claim 8, the solenoid valve being calibrated by means of the standard voltage.

10. Method according to one of the preceding Claims 1 to 9, the region being a working volume of a gas spring, in particular of an air spring.

**11.** Computer program for calculating a pressure in a region which is closed off by a solenoid valve, **characterized by** program means for carrying out the following steps:

- determining a peak point of the current flowing on account of a voltage applied to the solenoid valve,
- determining the pressure on the basis of the determination of the peak point.

**12.** Computer program according to Claim 11, the pressure being determined on the basis of the peak value of the current at the peak point.

**13.** Computer program product according to Claim 11 or 12, having a characteristic curve for determining the pressure on the basis of the peak value of the current at the peak point.

**14.** Computer program product according to Claim 11, 12 or 13, the program means being designed for calculating the pressure on the basis of the peak point.

**15.** Computer program product according to one of the preceding Claims 11 to 14, the program means being designed for increasing the voltage step by step by increasing a pulse width modulation ratio step by step, and for determining the pressure on the basis of the pulse width modulation ratio at the peak point.

**16.** Computer program product according to Claim 15, the program means being designed for calculating the peak value of the current from the pulse width modulation ratio at the peak point and from the coil resistance of the solenoid valve.

**17.** Device for determining a pressure in a region which is closed off by a solenoid valve (106; 406), having a control unit (110; 410) for applying a voltage to the solenoid valve, **characterized in that** the control unit is designed for determining a peak point (S) of the current (I) flowing on account of the voltage and for determining the pressure on the basis of the peak point.

**18.** Device according to Claim 17, having means (114; 420, 424) for determining the peak value (I_switching) of the current at the peak point (S), the control unit being designed for determining the pressure on the basis of the peak value.

**19.** Device according to Claim 17 or 18, the control unit being designed for increasing step by step a pulse width modulation ratio of the voltage applied to the solenoid valve and for determining the pressure on the basis of the pulse width modulation ratio at the peak point.

**Revendications**

**1.** Procédé de mesure de la pression dans une zone adjacente à une soupape magnétique, **caractérisé par** les étapes suivantes :

application d'une tension sur la soupape magnétique,
détermination du point de sommet du courant qui s'écoule suite à l'application de la tension,
détermination de la pression sur base de la détermination du point de sommet.

**2.** Procédé selon la revendication 1, dans lequel la valeur de sommet du courant est mesurée au point de sommet et la pression est déterminée sur base de la valeur de sommet.

**3.** Procédé selon les revendications 1 ou 2, dans lequel la détermination de la pression s'effectue par l'intermédiaire d'un champ de lignes caractéristiques.

**4.** Procédé selon les revendications 1, 2 ou 3, dans lequel la détermination de la pression s'effectue par calcul.

**5.** Procédé selon l'une des revendications 1 à 4 qui précèdent, dans lequel la tension est augmentée par augmentation pas à pas d'un rapport de modulation de la largeur des impulsions et la détermination de la pression s'effectue sur base du rapport de modulation de la largeur des impulsions au point de sommet.

**6.** Procédé selon la revendication 5, dans lequel la valeur de sommet du courant est déterminée à partir du rapport de modulation de la largeur des impulsions au point de sommet et de la résistance de la bobine de la soupape magnétique et la détermination de la pression s'effectue sur base de la valeur de sommet.

**7.** Procédé selon l'une des revendications 1 à 6 qui précèdent, dans lequel la détermination de la pression sur base de la valeur de sommet du courant tient compte de la dépendance de la résistance de la bobine de la soupape magnétique vis-à-vis de la température.

**8.** Procédé selon l'une des revendications 5, 6 ou 7 qui précèdent, dans lequel le rapport de modulation de la largeur des impulsions au point de sommet est rapporté à une tension normalisée.

**9.** Procédé selon la revendication 8, dans lequel la soupape magnétique est étalonnée au moyen de la tension normalisée.

**10.** Procédé selon l'une des revendications 1 à 9 qui précèdent, dans lequel la zone est le volume de travail d'un amortisseur à gaz et en particulier d'un amortisseur pneumatique.

**11.** Programme informatique destiné à calculer la pression dans une zone fermée par une soupape magnétique,
**caractérisé par** des moyens de programme qui permettent d'exécuter les étapes suivantes :

détermination du point de sommet du courant qui s'écoule en conséquence de la tension appliquée sur la soupape magnétique et détermination de la pression sur base de la détermination du point de sommet.

**12.** Programme informatique selon la revendication 11, dans lequel la détermination de la pression s'effectue sur base de la valeur de sommet du courant au point de sommet.

**13.** Programme informatique selon les revendications 11 ou 12, qui présente une ligne caractéristique qui permet de déterminer la pression sur base de la valeur de sommet du courant au point de sommet.

**14.** Programme informatique selon les revendications 11, 12 ou 13, dans lequel les moyens de programme sont configurés pour calculer la pression sur base du point de sommet.

**15.** Programme informatique selon l'une des revendications 11 à 14 qui précèdent, dans lequel les moyens de programme sont configurés pour augmenter la tension pas à pas par augmentation pas à pas d'un rapport de modulation de la largeur des impulsions et pour déterminer la pression sur base du rapport de modulation de la largeur des impulsions au point de sommet.

**16.** Programme informatique selon la revendication 15, dans lequel les moyens de programme sont configurés pour calculer la valeur de sommet du courant à partir du rapport de modulation de la largeur des impulsions au point de sommet et à partir de la résistance de la bobine de la soupape magnétique.

**17.** Dispositif de la détermination de la pression dans une zone fermée par une soupape magnétique (106; 406), qui présente un appareil de commande (110; 410) qui applique une tension sur la soupape magnétique, **caractérisé en ce que**
l'appareil de commande est configuré pour déterminer un point de sommet (S) du courant (I) qui s'écoule en raison de l'application de la tension et pour déterminer la pression sur base du point de sommet.

**18.** Dispositif selon la revendication 17, qui présente des moyens (114; 420, 424) de détermination de la valeur de seuil (I_Schalt) du courant au point de sommet (S), l'appareil de commande étant configuré pour déterminer la pression sur base de la valeur de sommet.

**19.** Dispositif selon les revendications 17 ou 18, dans lequel l'appareil de commande est configuré pour augmenter pas à pas le rapport de modulation de la largeur des impulsions de la tension appliquée sur la soupape magnétique et pour déterminer la pression sur base du rapport de modulation de la largeur des impulsions au point de sommet.

Fig. 1

# Fig. 2

**Schaltstromcharakteristik**

# Fig. 3

| | |
|---|---|
| Spannung an Magnetventil anlegen | ~300 |

↓

| | |
|---|---|
| Messung Strom | ~302 |

↓

| | |
|---|---|
| Bestimmung des Scheitelwerts | ~304 |

↓

| | |
|---|---|
| Bestimmung Differenzdruck aus Scheitelwert | ~306 |

## Fig. 4

400

**Steuergerät** — 410

**Kennlinienfeld** — 418

Druck ◄

**Programm** — 420

**Strom** — 424

p_Arbeitsvolumen — 402

F_Magnet

F_Druck          F_Feder

408

406

PWM

U

U'

422

p_Arbeitsleitung          416          404

EP 1 644 208 B1

# Fig. 5

# Fig. 6

# Fig. 7

**700**

einmalig am Bandende

p_norm → | Magnetventil-Normierung | PWM_norm

U_bord    PWM_mess

| Magnetventil anziehen |

**704**

PWM_aktuell

| Druckbestimmung |

**702**

p_ist

RF | Spulentemperatur-faktor | ← R_norm
                              ← I_prüf

**706**

EP 1 644 208 B1

# Fig. 8

p_norm, U_norm —— 800

PWM_norm =
f (p_norm) —— 802

PWM_norm

# Fig. 9

U_prüf, I_prüf — 900

R_prüf =
U_prüf / I_prüf — 902

R_prüf

R_norm — 906

RF =
R_prüf / R_norm

904

RF

# Fig. 10

U_bord, PWM_mess — 1000

PWM_aktuell =
PWM_mess * (U_bord / U_norm) — 1002

PWM_aktuell

Fig. 11

RF, PWM_aktuell ⟋ 1100

PWM_20 =
PWM_aktuell / RF ⟋ 1102

PWM_20

p_norm
PWM_norm ⟋ 1106

p_ist =
PWM_20 / PWM_norm * p_norm
⟋ 1104

p_ist [bar]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19959556 C1

- EP 1243447 A2